Europäisches Patentamt

European Patent Office

Office européen des brevets

(11) Veröffentlichungsnummer: **0 426 971 A1**

(12) **EUROPÄISCHE PATENTANMELDUNG**

(21) Anmeldenummer: 90117331.0

(22) Anmeldetag: 08.09.90

(51) Int. Cl.5: **A47G 19/12, A47J 45/06**

(30) Priorität: 10.11.89 DE 3937461

(43) Veröffentlichungstag der Anmeldung:
15.05.91 Patentblatt 91/20

(84) Benannte Vertragsstaaten:
AT BE CH DE DK ES FR GB GR IT LI LU NL SE

(71) Anmelder: MELITTA HAUSHALTSPRODUKTE
GmbH & CO. KOMMANDITGESELLSCHAFT
Ringstrasse 99
W-4950 Minden(DE)

(72) Erfinder: Salomon, Thomas, Dipl.-Ing.

Kranichweg 5
W-4815 Schloss Holte(DE)
Erfinder: Slomka, Hans Jürgen
Tauberweg 36
W-4950 Minden(DE)
Erfinder: Ropers, Rolf Peter, Dipl.-Ing.
Hans-Lüken-Str. 20
W-4953 Petershagen(DE)

(74) Vertreter: Stracke, Alexander, Dipl.-Ing. et al
Jöllenbecker Strasse 164
W-4800 Bielefeld 1(DE)

(54) **Glaskanne mit einem Griff.**

(57) Gegenstand der Erfindung ist eine Glaskanne (1) mit einem Griff (2), der mit einem den oberen Rand (5) der Glaskanne (1) übergreifenden Haltering (3) verbunden ist. Zweck der Erfindung ist eine äußerst sichere und praxisgerechte Verbindung zwischen Glaskanne (1) und Haltering (3) mit daran befestigtem Griff (2).

Zu diesem Zweck wird einerseits eine umlaufende Nut (4) des Halteringes (3), in die der obere Rand (5) der Glaskanne (1) hineinragt, in ansich bekannter Weise mit Dichtungsmaterial ausgekleidet. Zusätzlich ist an der die Nut (4) im Inneren des Glaskannenrandes begrenzenden Wandung (10) ein vorzugsweise vollständig umlaufender Flanschring (9) vorgesehen, der nach dem Ausgießen der Nut (4) mit Kunststoff durch entsprechende Verformung, vorzugsweise thermische Verformung, bis zur Anlage an einem Wulstrandabschnitt (11) der Glaskanne (1) umgebogen wird. Hierdurch ergibt sich zusätzlich eine formschlüssige Verbindung zwischen Glaskanne (1) und Haltering (3).

Fig. 1

## GLASKANNE MIT EINEM GRIFF

Die vorliegende Erfindung betrifft eine Glaskanne mit einem Griff, welcher mit einem, den oberen Rand der Glaskanne übergreifenden Haltering verbunden ist, wobei der obere Rand der Glaskanne in eine umlaufende Nut des Halteringes hineinragt und die Nut mit einem Dichtungsmaterial ausgekleidet ist.

Glaskannen der vorerwähnten Art sind ansich bekannt.

Durch die Auskleidung der umlaufenden Nut des Halteringes wird der obere Randbereich der Glaskanne innerhalb dieser Nut vom Dichtungsmaterial umschlossen, so daß sich eine ansich kostengünstig herstellbare Verbindung zwischen Haltering und Glaskanne ergibt. Gleichzeitig dient die Auskleidung der umlaufenden Nut des Halteringes der Abdichtung des Verbindungsbereiches zwischen Glaskanne und Haltering.

Es hat sich gezeigt, daß im Dauergebrauch nicht vollständig ausgeschlossen werden kann, daß sich die Verbindung zwischen Haltering und Glaskanne lockert bzw. löst, da diese Verbindung praktisch ausschließlich auf der Haft kraft des Dichtungsmateriales beruht, mittels dessen die Nut ausgekleidet ist.

Insoweit ist die Gefahr nicht völlig auszuschließen, daß sich ein Benutzer bei der Handhabung einer derartigen Glaskanne, in die beispielsweise ein Heißgetränk eingefüllt ist, durch Verbrühungen verletzen kann.

Der vorliegenden Erfindung liegt die Aufgabe zugrunde, eine Glaskanne der gattungsgemäßen Art dahingehend zu verbessern, daß ein Lösen des Haltegriffes von der Glaskanne im übrigen unabhängig von der Haftkraft des die umlaufende Nut des Halteringes auskleidenden Dichtungsmateriales nicht möglich ist.

Diese Aufgabe wird erfindungsgemäß dadurch gelöst, daß an der die Nut im Inneren des Glaskannenrandes begrenzenden Wandung ein vorzugsweise vollständig umlaufender Flanschring vorgesehen ist, welcher einen Wulstrandabschnitt der Glaskanne untergreift und an diesem abgestützt ist.

Mit der Erfindung wird der Vorteil erzielt, daß der Haltering an der Glaskanne praktisch zweifach gesichert ist. Zum einen ergibt sich die Sicherung dieses Halteringes in bekannter Weise durch die Auskleidung der umlaufenden Nut mit einem entsprechend geeigneten Dichtungsmaterial. Zusätzlich wird der Haltering durch den vorzugsweise vollständig umlaufenden Flanschring formschlüssig an der Glaskanne festgelegt, so daß ein Lösen bzw. ein Trennen des Halteringes von der Glaskanne auch dann nicht möglich ist, wenn die Haltekraft des die Nut auskleidenden Dichtungsmateriales völlig verloren gegangen ist. Allenfalls könnte hier eine gewisse Lockerung des Halteringes eintreten, so daß ein Benutzer die nicht mehr ordnungsgemäße Verbindung zwischen Haltering und Glaskanne bemerkt, ein Trennen des Halteringes von der Glaskanne im übrigen ist aber durch die formschlüssige Verbindung, bedingt durch das Untergreifen des Wulstrandabschnittes durch den Flanschring, verhindert. Verletzungsgefahren durch das Lösen des Halteringes von der Glaskanne im übrigen sind somit wirksam vermieden.

Weitere Merkmale der Erfindung sind Gegenstand von Unteransprüchen.

Ein Ausführungsbeispiel der Erfindung ist in den beigefügten Zeichnungen dargestellt und wird im folgenden näher beschrieben. Es zeigen:

Fig. 1 einen Vertikalschnitt durch eine Glaskanne gemäß der Erfindung vor dem endgültigen Festlegen eines mit einem Griff versehenen Halteringes

Fig. 2 die in Fig. 1 mit II bezeichnete Einzelheit nach dem endgültigen Festlegen des Halteringes in vergrößerter Darstellung.

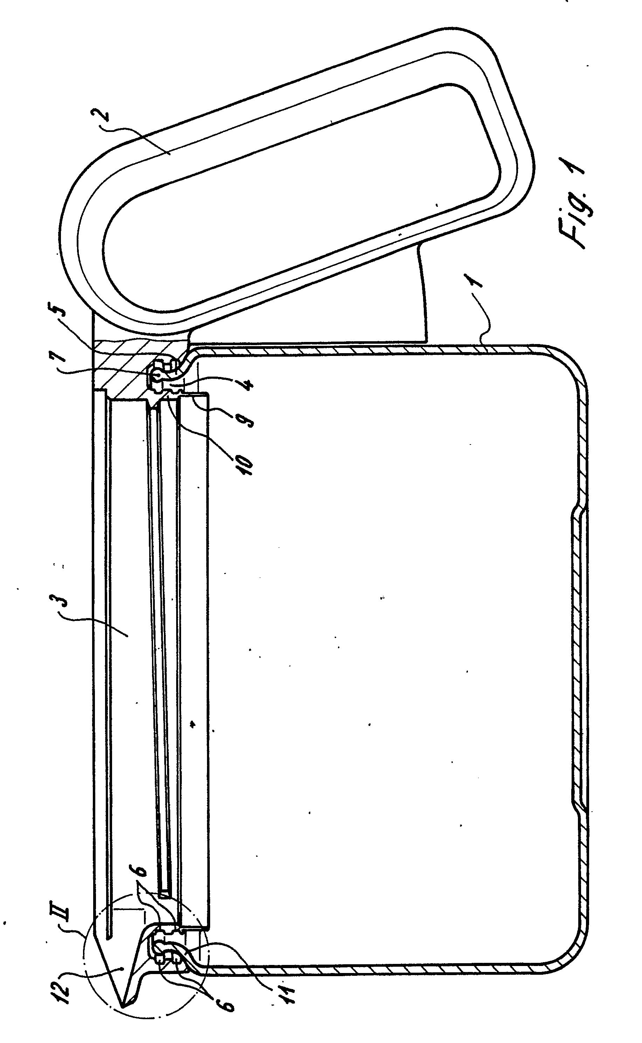

Die in Fig. 1 dargestellte, mit dem Bezugszeichen 1 versehene Glaskanne ist in ansich bekannter Weise mit einem Griff 2 versehen. Dieser Griff 2 ist mit einem Haltering 3 verbunden, vorzugsweise sind Haltering 3 und Griff 2 einstückig aus Kunststoff gefertigt.

Der Haltering 3 ist mit einer umlaufenden Nut 4 ausgestattet, in welche der obere Rand 5 der Glaskanne 1 hineinragt.

Die umlaufende Nut 4 ist im Bereich ihrer Seitenflanken mit Hinterschneidungen 6 versehen und der obere Rand 5 der Glaskanne 1 ist im Bereich seines freien Endes mit einer wulstartigen Verdickung 7 ausgestattet.

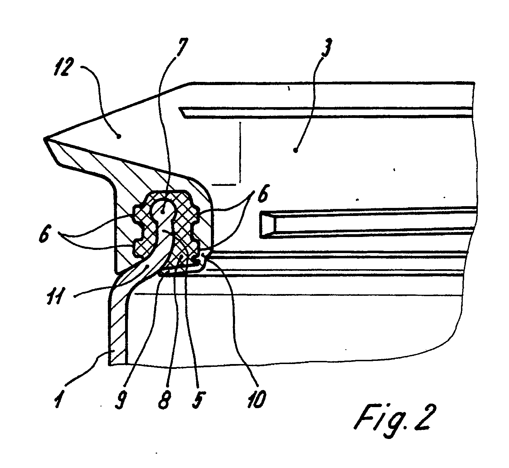

Wie Fig. 2 zeigt, ist die umlaufende Nut 4 des Halteringes 3 nach der Verbindung zwischen Glaskanne 1 und Haltering 3 mit Kunststoff ausgegossen, der nach dem Erstarren einen Ring 8 bildet, welcher einerseits die Hinterschneidungen 6 ausfüllt und andererseits die wulstartige Verdickung 7 der Glaskanne 1 umschließt. Schon diese Maßnahmen bewirken eine vergleichsweise sichere Festlegung des Halteringes 3 gegenüber der Glaskanne 1. Gleichzeitig wird durch das Ausgießen der Nut 4 eine Abdichtung des Verbindungsbereiches zwischen Haltering 3 und Glaskanne 1 bewirkt.

Zusätzlich ist der Haltering 3 gegenüber der Glaskanne 1 gesichert durch einen vorzugsweise umlaufenden Flanschring 9, der an der die Nut 4 im Inneren des Glaskannenrandes begrenzenden Wandung 10 des Halteringes 3 vorgesehen ist und der nach erfolgter Montage des Halteringes 3 an der Glaskanne 1 einen Wulstrandabschnitt 11 der Glaskanne 1 untergreift und an diesem Wulstrandabschnitt 11 anliegt, was Fig. 2 sehr deutlich zeigt. Es ist gewissermaßen eine formschlüssige Verbindung zwischen der Glaskanne 1 und dem Haltering 3 zusätzlich geschaffen, so daß ein Lösen des Halteringes 3 von der Glaskanne 1 auch dann nicht mehr möglich ist, wenn die Haftkräfte des in die Nut 4 eingegossenen Ringes 8 nachlassen oder unwirksam werden sollten.

Der Flanschring 9 ist vorzugsweise einstückig mit dem aus Kunststoff bestehenden Haltering 3 gefertigt und durch entsprechende Verformung bis zur Anlage an dem Wulstrandabschnitt 11 der Glaskanne 1 umgebogen. Vorzugsweise wird der Flanschring 9 durch thermische Verformung bis zur Anlage an dem Wulstrandabschnitt 11 der Glaskanne 1 umgebogen.

Der Haltering 3 ist mit einer angeformten Ausgießschnaupe 12 versehen, welche dem Griff 2 vorteilhafterweise diametral gegenüberliegt.

Abweichend vom beschriebenen Ausführungsbeispiel kann die umlaufende Nut 4 auch von einem vorgefertigten Dichtring ausgekleidet sein, der in die Nut 4 hineingedrückt ist. Die Verwendung eines derartigen Dichtringes kann montagetechnisch sogar von Vorteil sein.

## Ansprüche

1. Glaskanne mit einem Griff, welcher mit einem, den oberen Rand der Glaskanne übergreifenden Haltering verbunden ist, wobei der obere Rand der Glaskanne in eine umlaufende Nut des Halteringes hineinragt und die Nut mit einem Dichtungsmaterial ausgekleidet ist, **dadurch gekennzeichnet**, daß an der die Nut (4) im Inneren des Glaskannenrandes begrenzenden Wandung (10) ein vorzugsweise vollständig umlaufender Flanschring (9) vorgesehen ist, welcher einen Wulstrandabschnitt (11) der Glaskanne (1) untergreift und an diesem abgestützt ist.

2. Glaskanne nach Anspruch 1, dadurch gekennzeichnet, daß der Haltering (3) mit dem Flanschring (9) einstückig aus Kunststoff hergestellt und der Flanschring (9) durch entsprechende Verformung bis zur Anlage an dem Wulstrandabschnitt (11) der Glaskanne (1) umgebogen ist.

3. Glaskanne nach Anspruch 2, dadurch gekennzeichnet, daß der Flanschring (9) durch thermische Verformung umgebogen ist.

4. Glaskanne nach einem oder mehreren der Ansprüche 1 bis 3, dadurch gekennzeichnet, daß die umlaufende Nut (4) im Bereich ihrer Seitenflanken mit Hinterschneidungen (6) versehen ist.

5. Glaskanne nach einem oder mehreren der Ansprüche 1 bis 4, dadurch gekennzeichnet, daß der obere Rand (5) der Glaskanne (1) an seinem freien Ende mit einer umlaufenden, wulstartigen Verdickung (7) versehen ist.

6. Glaskanne nach einem oder mehreren der Ansprüche 1 bis 5, dadurch gekennzeichnet, daß der Haltering (3) mit einer angeformten Ausgießschnaupe (12) versehen ist.

7. Glaskanne nach Anspruch 6, dadurch gekennzeichnet, daß die Ausgießschnaupe (12) dem Griff (2) diametral gegenüberliegt.

8. Glaskanne nach einem oder mehreren der Ansprüche 1 bis 7, dadurch gekennzeichnet, daß der Griff (2) einstückig an den Haltering (3) angeformt ist.

Fig. 1

EP 0 426 971 A1

Fig. 2

Europäisches
Patentamt

**EUROPÄISCHER
RECHERCHENBERICHT**

Nummer der Anmeldung

**EP 90 11 7331**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-4 838 463 (ROBERTS) <br> * Spalte 4, Zeile 41 - Spalte 5, Zeile 12; Figuren * * Spalte 2, Zeilen 55 - 59 * <br> — — — | 1,4-8,2,3 | A 47 G 19/12 <br> A 47 J 45/06 |
| Y | FR-A-2 614 231 (SCHOTT GLASWERKE) <br> * Zusammenfassung * <br> — — — | 2,3 | |
| A | US-A-3 632 025 (BLOOMFIELD) <br> — — — — — | | |

| | | | RECHERCHIERTE SACHGEBIETE (Int. Cl.5) |
|---|---|---|---|
| | | | A 47 G <br> A 47 J |

Der vorliegende Recherchenbericht wurde für alle Patentansprüche erstellt

| Recherchenort | Abschlußdatum der Recherche | Prüfer |
|---|---|---|
| Den Haag | 18 Februar 91 | BODART P.A. |